# EUROPEAN PATENT SPECIFICATION

(11) **EP 2 511 063 B1**
(45) Date of publication and mention of the grant of the patent: **28.11.2018**
(21) Application number: 10835939.9
(22) Date of filing: 06.12.2010
(51) Int. Cl.: B29C 45/14, B29C 45/02, B29L 31/34, B29C 39/10, B29C 39/38, B29C 45/72

(54) **RESIN-SEALING APPARATUS AND RESIN-SEALING METHOD**
KUNSTHARZVERSIEGELUNGSVORRICHTUNG UND KUNSTHARZVERSIEGELUNGSVERFAHREN
APPAREIL DE SCELLEMENT À LA RÉSINE ET PROCÉDÉ ASSOCIÉ

(30) Priority: 07.12.2009 JP 2009277808
(43) Date of publication of application: 17.10.2012
(73) Proprietor: Towa Corporation, Kyoto-shi, Kyoto 601-8105 (JP)
(72) Inventor: URATANI, Takafumi, Kyoto-shi Kyoto 601-8105 (JP); TAKEUCHI, Shin, Kyoto-shi Kyoto 601-8105 (JP); SHIRASAWA, Masanori, Kyoto-shi Kyoto 601-8105 (JP); TAKAHASHI, Koichi, Kyoto-shi Kyoto 601-8105 (JP)
(74) Representative: Hoeger, Stellrecht & Partner Patentanwälte mbB
(86) International application number: PCT/JP2010/071842
(87) International publication number: WO 2011/071019

(56) References cited:
- JP-A- 10 223 670
- JP-A- H07 321 137
- JP-A- 2007 281 366
- JP-A- 2008 270 688
- JP-A- 2008 270 688
- JP-A- 2009 088 352

## Description

### TECHNICAL FIELD

The present invention relates to an apparatus and method for resin-sealing an electronic unit having a special shape.

### BACKGROUND ART

In recent years, control electronic units have been increasingly used in many fields. In particular, in the field of transportation equipment, conventionally used machine controls are being replaced by electronic controls. Originally, as an electronic unit used in transportation equipment, an internal combustion engine control unit (Engine Control Unit) was used for controlling the ignition timing, fuel injection, idle up, limiter, and other factors of an internal combustion engine. Since then, the functions and the extent of control of electronic units for transportation equipment have significantly increased. Recently, electronic units have been used in a wide range of areas such as driving, braking, and steering systems. Given this factor, in these days, electronic units for transportation equipment are called electronic control units (which will be hereinafter referred to as "ECUs"). In this specification, the "transportation equipment" collectively includes any types of equipment having an engine such as an internal-combustion engine, an electric motor, or other mechanisms, for transporting persons or freight thereon.

The rough configuration of an ECU is as follows. Passive components, semiconductor devices, a sensor, a connector having a plastic body, and other elements are mounted on a printed-circuit board (which may also be referred to as the "circuit substrate" hereinafter). The passive components include a resistor, capacitor, coil, crystal oscillator, and other elements. The semiconductor devices include a microcomputer, a power IC, and other devices. Each of the aforementioned composition elements will be hereinafter referred to as a "component." A plastic or metal cover (a plastic cover or a metal housing) is attached to the circuit substrate in such a manner as to cover the space in which a plurality of components are provided. In some ECUs, a heat-release member such as a metal heat-release plate is further provided (for example, see Non-Patent Document 1).

An ECU is normally mounted at a place in a favorable environment in terms of temperature, vibration, and other factors: that is, in a compartment for crew or drivers. However, in recent years, an ECU has been mounted near the controlled objects in order to decrease the amount of wiring harnesses for connecting the controlled objects and the ECU and thereby reduce the weight of the transportation equipment itself, as well as for other reasons. Compared to the inside of the compartment for crew or drivers, the area near the controlled objects is often hostile to the ECU. Accordingly, there is more demand that ECUs have a heat resistance and vibration resistance better than ever. In particular, the temperature, vibration, and other environmental conditions of an engine room in which an ECU for controlling an internal-combustion engine (which will be referred to as the "internal-combustion engine control ECU") is mounted are severe, compared to those of the inside of a compartment for crew or drivers. In addition, since water, oil, or other substances may exist in an engine room, an internal-combustion engine control ECU is also required to be resistant to water, oil and other substances.

The conventional configuration of ECUs in which a cover is attached to a circuit substrate on which a plurality of components are mounted has proved to be insufficient to meet such demands. Given this factor, another configuration has been increasingly used in which a sealing resin made of a curable resin, as typified by epoxy resin and silicon resin, is formed on a circuit substrate on which a plurality of components are mounted (which will hereinafter be referred to as the "pre-sealed substrate"). In an ECU having such a configuration, the sealing resin completely covers the area around the plurality of components mounted on the circuit substrate except for connectors and other components. One of the methods used to form a sealing resin on a pre-sealed substrate as just described is a resin-sealing technology which is used in the manufacturing process of semiconductor packages (for example, refer to Patent Document 1).

Printed-circuit boards, lead frames, and other components (which will hereinafter be referred to as "circuit substrates and other components") generally used in manufacturing a semiconductor package have a rectangular planar shape (including square, of course, here and after). The dimensions of such circuit substrates and other components are standardized to some extent: they do not significantly differ in thickness from each other (in other words, the surface of each circuit substrate has few irregularities and is relatively flat) and are not thick. Hence, the circuit substrates and other components can be quickly pre-heated before the resin-sealing process. In addition, resin-sealed products (in which a plurality of components mounted on a circuit substrate and other components are resin-sealed) also have a rectangular planar shape. Semiconductor packages manufactured by singulating a resin-sealed product also have a rectangular planar shape. Therefore, in manufacturing various kinds of semiconductor packages, a thin magazine for containing an object such as a circuit substrate and other components, resin-sealed product, or semiconductor package can be used.

### BACKGROUND ART

### PATENT DOCUMENT

Closest prior art JP H 07 321 137 and related prior art JP 2008 270 688 and JP-A 2007-243146 (pp. 4-5)

### NON-PATENT DOCUMENT

[Non-Patent Document 1] Hirotaka Ueda, "Jisso Zoom In (2)" ("Zooming in on Packaging"), JPCA NEWS, Japan Electronics Packaging and Circuits Association, December 2008, pp. 22-26

### DISCLOSURE OF THE INVENTION

### PROBLEMS TO BE SOLVED BY THE INVENTION

In the manufacturing process of an ECU, employing a type of resin-sealing technology which is used in the manufacturing process of general semiconductor packages brings about the following problems.

First, the dimensions and shapes of pre-sealed substrates used for an ECU vary according to the model of the product. Therefore, a thin magazine cannot be used in the manufacturing process.

Second, the pre-sealed substrate used for an ECU is different from that used in a manufacturing process of semiconductor packages, and has a certain level of thickness. Hence, it takes a long time to pre-heat such a pre-sealed substrate, which limits the efficiency of the resin sealing process.

Third, pre-sealed substrates used for an ECU have projections due to the presence of a connector and a heat-release element such as a metal heat-release plate, and therefore have an irregular shape. The position, dimension, and size of these projections vary according to the model of the product. That is, although the general shape of the connector or the heat-release member such as a metal heat-release plate is a rectangular parallelepiped, there are projections having a certain length on them. Due to these projections, the pre-sealed substrates have an irregular shape. In addition, a pre-sealed substrate for an ECU is composed of materials (or components) having significantly different thermal conductivities; for example, a heat-release plate has a high thermal conductivity, whereas a connector with a body made of plastic has a low thermal conductivity. Consequently, when a pre-sealed substrate is pre-heated, a temperature gradient occurs, which might cause the detachment of the sealing resin.

The present invention has been developed to solve the aforementioned problems, and the objective thereof is to provide a resin-sealing apparatus and a resin-sealing method capable of quickly pre-heating a pre-sealed substrate having an irregular shape in resin-sealing an electronic unit with a temperature gradient as small as possible.

### MEANS FOR SOLVING THE PROBLEMS

The numerals and characters in parenthesis in the description of "MEANS FOR SOLVING THE PROBLEMS" and "EFFECTS OF THE INVENTION" are used with the aim of establishing an easy comparison between the words in the specification and the components illustrated in the figures. It should be noted that these numerals and characters do not indicate that "the words in the specification are to be limitedly interpreted as the components illustrated in the figures."

To solve the aforementioned problems, the present invention provides a resin-sealing apparatus used for manufacturing an electronic unit (6) by collectively resin-sealing a plurality of components on a pre-sealed substrate (4) having a circuit substrate (26) and the plurality of components (25) mounted on the circuit substrate (26), the components (25) including at least a connector (28) with a projection (30), including:
a tray (7) on which the aforementioned one or more pre-sealed substrates (4) can be placed;
a preheating mechanism (14, 41) for pre-heating the tray (7) on which the aforementioned one or more pre-sealed substrates (4) are placed;
a first transfer mechanism (12) for transferring the tray (7) on which the aforementioned one or more pre-sealed substrates (4) are placed to the preheating mechanism (14, 41) and placing the tray (7) on the preheating mechanism (14, 41);
a resin-sealing mold (17) having a cavity (18) which is to be filled with fluid resin and one or more substrate setting portions (18c) on which the aforementioned one or more pre-sealed substrate (4) can be placed;
a carry-in mechanism (16) for taking out the pre-heated one or more pre-sealed substrates (4) from the tray (7) and placing the aforementioned one or more pre-sealed substrates (4) respectively to the substrate setting portions (18c) of the resin-sealing mold (17); and
a taking-out mechanism (19) for taking out, from the resin-sealing mold (17), one or more resin-sealed products (5) formed by resin-sealing each of the aforementioned one or more pre-sealed substrates (4) with a cured resin which is formed by curing the fluid resin filling the cavity (18d), wherein:
the tray (7) has a recess (39) corresponding to the projection (30) of the pre-sealed substrate (4), and the aforementioned one or more pre-sealed substrates (4) can be placed on the tray (7), with the projection (30) and the recess (39) being aligned.

The present invention also provides a resin-sealing apparatus used in manufacturing an electronic unit (6), using a pre-sealed substrate (4) having a circuit substrate (26) and a plurality of components (25) mounted on the circuit substrate (26), by collectively resin-sealing the plurality of components (25), including:
a tray (7) on which the aforementioned one or more pre-sealed substrates (4) can be placed;
a preheating mechanism (14, 41) for pre-heating the tray (7) on which the aforementioned one or more pre-sealed substrates (4) are placed;
a first transfer mechanism for transferring the tray (7) on which the aforementioned one or more pre-sealed substrates (4) are placed to the preheating mechanism (14, 41) and placing the tray (7) on the preheating mechanism (14, 41);
a resin-sealing mold (17) having a cavity (18) which is to be filled with fluid resin and one or more substrate setting portions (18c) on which the aforementioned one or more pre-sealed substrate (4) can be placed;
a carry-in mechanism (16) for taking out the pre-heated one or more pre-sealed substrates (4) from the tray (7) and placing the aforementioned one or more pre-sealed substrates (4) respectively to the substrate setting portions (18c) of the resin-sealing mold (17); and
a taking-out mechanism (19) for taking out, from the resin-sealing mold (17), one or more resin-sealed products (5) formed by resin-sealing each of the aforementioned one or more pre-sealed substrates (4) with a cured resin which is formed by curing the fluid resin filling the cavity (18d), wherein:
   a recess (39, 100) corresponding to the shape of each of the aforementioned one or more pre-sealed substrates (4) and an opening (47) overlapping the pre-sealed substrate (4) placed on the tray (7) are provided in the tray (7);
   the aforementioned one or more pre-sealed substrates (4) can be placed on the tray (7), with the pre-sealed substrate (4) and the recess (39, 100) being aligned; and
   the preheating mechanism (14, 41) includes one or more stand portions (42) each of which incorporates a first heater (41), and each of which is placed in the opening (47) and comes in contact with each of the aforementioned one or more pre-sealed substrates (4) when the tray (7) is placed on the preheating mechanism (14, 41).

The aforementioned resin-sealing apparatus according to the present invention may include a plurality of aforementioned preheating mechanisms (14, 41). In such a configuration, one tray (7) may be placed sequentially on each of the plurality of preheating mechanisms (14, 41), or one of a plurality of trays (7) may be placed on each of the plurality of preheating mechanisms (14, 41).

In the resin-sealing apparatus according to the present invention,
the preheating mechanism (14, 41) may have one or more second heaters (48) for pre-heating each of the aforementioned one or more pre-sealed substrates (4); and
each of the aforementioned one or more second heater (48) may emit infrared light onto a boundary (33) between an area having a low thermal conductivity and an area to be resin-sealed with the cured resin in each of the aforementioned one or more pre-sealed substrates (4).

The aforementioned resin-sealing apparatus according to the present invention may include:
a cooling mechanism (15) for cooling the tray (7) from which the aforementioned one or more pre-sealed substrates (4) have been taken out;
a second transfer mechanism (13) for carrying the tray (7) from which the aforementioned one or more pre-sealed substrates (4) have been taken out to the cooling mechanism (15); and
a storing mechanism (11) for storing the cooled tray (7), wherein
the aforementioned one or more pre-sealed substrates (4) are placed on the tray (7) taken out from the storing mechanism (11).

The aforementioned resin-sealing apparatus according to the present invention may include a plurality of aforementioned cooling mechanisms (15). In such a configuration, one tray (7) may be placed sequentially on each of the plurality of cooling mechanisms (15), or one of a plurality of aforementioned trays (7) may be placed on each of the plurality of cooling mechanisms (15).

In addition, the aforementioned resin-sealing apparatus according to the present invention may include a separation mechanism (22) for separating an unnecessary resin (37) composed of an unnecessary part of the cured resin from each of the aforementioned one or more resin-sealed products (5).

The present invention also provides a resin-sealing method used for manufacturing an electronic unit (6) by collectively resin-sealing a plurality of components (25) on a pre-sealed substrate (4) having a circuit substrate (26) and the plurality of components (25) mounted on the circuit substrate (26), the components (25) including at least a connector (28) with a projection (30), and the method comprising the steps of:
preparing a tray (7) on which the aforementioned one or more pre-sealed substrates (4) are placed;
transferring the tray (7) on which the aforementioned one or more pre-sealed substrates (4) are placed to a preheating mechanism (14, 41) and placing the tray (7) on the preheating mechanism (14, 41);
pre-heating the aforementioned one or more pre-sealed substrates (4);
taking out the pre-heated one or more pre-sealed substrates (4) from the tray (7), carrying the pre-heated one or more pre-sealed substrates (4) to a resin-sealing mold (17), and placing the aforementioned one or more pre-sealed substrates (4) to a predetermined position in the resin-sealing mold (17);
dipping the plurality of components (25) into fluid resin filling a cavity (18d) provided in the resin-sealing mold (17);
curing the fluid resin filling the cavity (18d) to form a cured resin; and
taking out, from the resin-sealing mold (17), one or more resin-sealed products (5) formed by resin-sealing each of the aforementioned one or more pre-sealed substrates (4), wherein:
   the tray (7) has a recess (39) corresponding to the projection (30) of the each of the aforementioned one or more pre-sealed substrates (4); and
   the step of preparing a tray (7) comprises aligning the projection (30) and the recess (39) and placing the aforementioned one or more pre-sealed substrates (4) on the tray (7).

In the aforementioned resin-sealing method according to the present invention, the step of placing the tray (7) on the preheating mechanism (14, 41) may include placing one tray (7) sequentially on a plurality of aforementioned preheating mechanisms (14, 41) or placing each of a plurality of aforementioned trays (7) on the plurality of aforementioned preheating mechanisms (14, 41), and gradually heating the trays (7).

The present invention also provides a resin-sealing method used in manufacturing an electronic unit (6) by collectively resin-sealing a plurality of components (25) on a pre-sealed substrate (4) having a circuit substrate (26) and the plurality of components (25) mounted on the circuit substrate (26), including the steps of:
preparing a tray (7) on which the aforementioned one or more pre-sealed substrates (4) are placed;
transferring the tray (7) on which the aforementioned one or more pre-sealed substrates (4) are placed to a preheating mechanism (14, 41) and placing the tray (7) on the preheating mechanism (14, 41);
pre-heating the aforementioned one or more pre-sealed substrates (4);
taking out the pre-heated one or more pre-sealed substrates (4) from the tray (7), carrying the pre-heated one or more pre-sealed substrates (4) to a resin-sealing mold (17), and placing the aforementioned one or more pre-sealed substrates (4) to a predetermined position in the resin-sealing mold (17);
dipping the plurality of components (25) into fluid resin filling a cavity (18d) provided in the resin-sealing mold (17);
curing the fluid resin filling the cavity (18d) to form a cured resin; and
taking out, from the resin-sealing mold (17), one or more resin-sealed products (5) formed by resin-sealing each of the aforementioned one or more pre-sealed substrates (4), wherein:
   the tray (7) has a recess (39, 100) corresponding to the shape of each of the aforementioned one or more pre-sealed substrates (4) and an opening (47) overlapping at least a portion of each of the aforementioned one or more pre-sealed substrates (4) placed on the tray (7);
   the preheating mechanism (14, 41) has one or more stand portions (42) each of which incorporates a first heater (41);
   the step of preparing a tray comprises aligning each of the aforementioned one or more pre-sealed substrates (4) and the recess (39, 100) and placing the aforementioned one or more pre-sealed substrates (4) on the tray (7); and
   the step of preheating comprises placing each of the aforementioned one or more stand portions (42) in the opening (47) so that the aforementioned one or more pre-sealed substrates (4) placed on the tray (7) respectively come into contact with the stand portions (42) and are thereby individually and directly pre-heated.

In the aforementioned resin-sealing method according to the present invention, the preheating mechanism (14, 41) may have one or more second heaters (48) for pre-heating each of the aforementioned one or more pre-sealed substrates (4); and the step of preheating may be characterized in that each of the aforementioned one or more second heaters (48) emits infrared light onto a boundary (33) between an area having a low thermal conductivity and an area to be resin-sealed with the cured resin in each of the aforementioned one or more pre-sealed substrates (4).

The aforementioned resin-sealing method according to the present invention may include the steps of:
carrying the tray (7) from which the aforementioned one or more pre-sealed substrates (4) have been taken out to the cooling mechanism (15);
cooling the tray (7) from which the aforementioned one or more pre-sealed substrates (4) have been taken out, by means of the cooling mechanism (15); and
storing the cooled tray (7).

In the aforementioned resin-sealing method according to the present invention, the step of cooling the tray may include placing one aforementioned tray (7) sequentially on a plurality of cooling mechanisms (15) or placing each of a plurality of aforementioned trays (7) on the plurality of cooling mechanisms (15), and then gradually cooling the tray or trays (7).

The aforementioned resin-sealing method according to the present invention may include the step of separating an unnecessary resin (37) composed of an unnecessary part of the cured resin from each of the aforementioned one or more resin-sealed products (5).

### EFFECTS OF THE INVENTION

In the present invention, one or more pre-sealed substrates (4) having an irregular shape including a projection (3) provided in a connector (28) are placed on the tray (7) on which a recess (39) corresponding to the projection (30) is formed. The pre-sealed substrates (4) placed on the tray (7) are pre-heated by using the preheating mechanism (14, 41, 48).After being pre-heated, the pre-sealed substrates (4) are taken out from the tray (7) and carried to a predetermined position in the resin-sealing mold (17). Then, the pre-sealed substrates (4) are resin-sealed. In this manner, the pre-sealed substrates (4) can be carried and resin-sealed by using the tray (7).

Additionally, in the present invention, one or more pre-sealed substrates (4) are placed on the tray (7) which has a recess (39) corresponding to the shape of each pre-sealed substrate (4). Then, the pre-sealed substrates (4) placed on the tray (7) are pre-heated by using the preheating mechanism (14, 41, 48). In this process, the preheating mechanism (14, 41) places the stand portion (42), which incorporates the first heater (41), in the opening (47) of the tray (7) and directly heats the pre-sealed substrates (4). After being pre-heated, the pre-sealed substrates (4) are taken out from the tray (7) and carried to a predetermined position in the resin-sealing mold (17). Then, the pre-sealed substrates (4) are resin-sealed. In this manner, by carrying the pre-sealed substrates (4) using the tray (7), they can be quickly and efficiently pre-heated, and further, can be resin-sealed.

In addition, each of the pre-sealed substrates (4) placed on the tray (7) is sequentially pre-heated by using one or more preheating mechanisms (14, 41, 48). This can suppress the thermal shock given to the pre-sealed substrates (4), and can quickly pre-heat the pre-sealed substrates (4) with the temperature gradient being as small as possible in the pre-sealed substrates (4).

Further, a tray (7) from which the pre-sealed substrates (4) have been taken out, i.e. an empty tray (7), is cooled by using the cooling mechanism (15). Then, such trays (7) are stored in the storing mechanism (11). Alternatively, after empty trays (7) are sequentially cooled or after each of the empty trays (7) is cooled by using a plurality of aforementioned cooling mechanisms (15), these trays (7) are stored. With this configuration, a tray (7) which has been used for pre-heating one or more pre-sealed substrates (4) can be quickly cooled and reused as a tray (7) for placing new one or more pre-sealed substrates (4) thereon.

The present invention may further include a separation mechanism (22) or separation process for separating an unnecessary resin (37) composed of an unnecessary part of the cured resin from the resin-sealed product (5). Separating the unnecessary resin (37) from the resin-sealed product (5) forms an electronic unit (6). Accordingly, in the present invention, the entire sequence of the processes for completing an electronic unit (6) from a pre-sealed substrate (4) can be performed.

### BRIEF DESCRIPTION OF THE DRAWINGS

Fig. 1A(1) is a schematic plain view of a resin-sealing apparatus according to the present invention, and Fig. 1A(2) is a schematic plain view showing resin-sealed products which have been formed by resin-sealing pre-sealed substrates with a resin-sealing mold of the resin-sealing apparatus.
Fig. 1B is a diagram showing pre-sealed substrates placed in a resin-sealing mold.
Figs. 2(1) and 2(2) are respectively a plain view and a front view, showing a pre-sealed substrate as an object of a resin-sealing method according to the present invention. Figs. 2(3) and 2(4) are respectively a plain view and a front view, showing a package completed by the resin-sealing method.
Fig. 3 is a partial front sectional view showing the state in which a pre-sealed substrate placed on a tray is being pre-heated.
Fig. 4 is a partial front sectional view showing a state in which an empty tray is forcibly cooled.

### BEST MODES FOR CARRYING OUT THE INVENTION

Hereinafter, embodiments of the present invention will be described with reference to the figures. The first embodiment relates to carrying a pre-sealed substrate by using a tray, and pre-heating the carried pre-sealed substrate. The second embodiment relates to forcibly cooling trays and circulating them for reuse.

### FIRST EMBODIMDENT

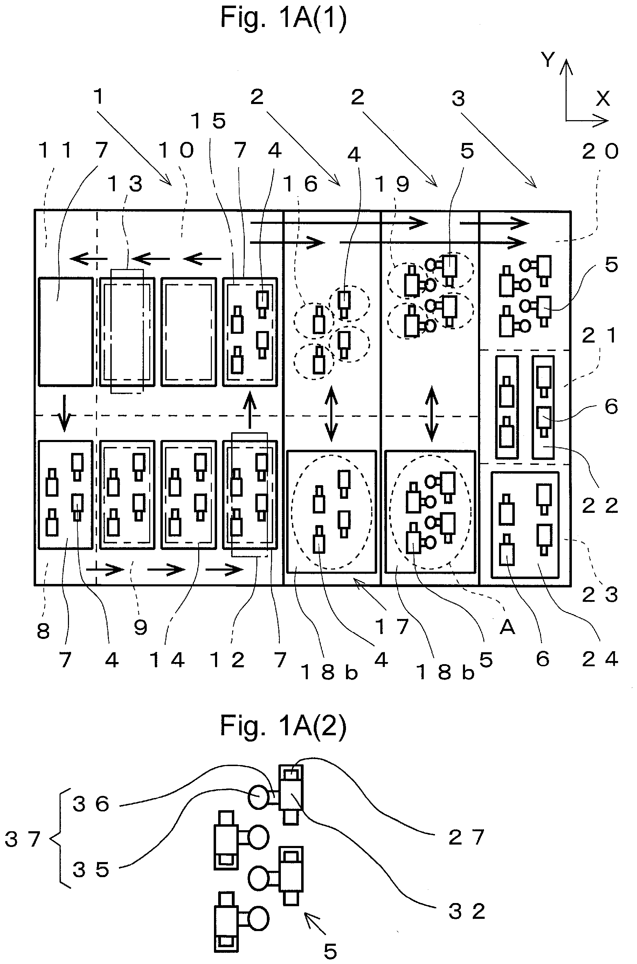

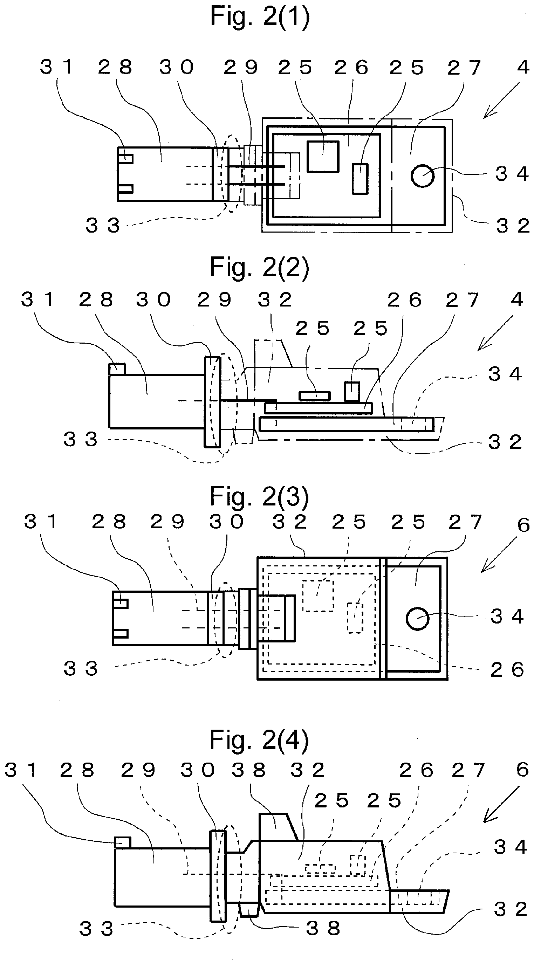

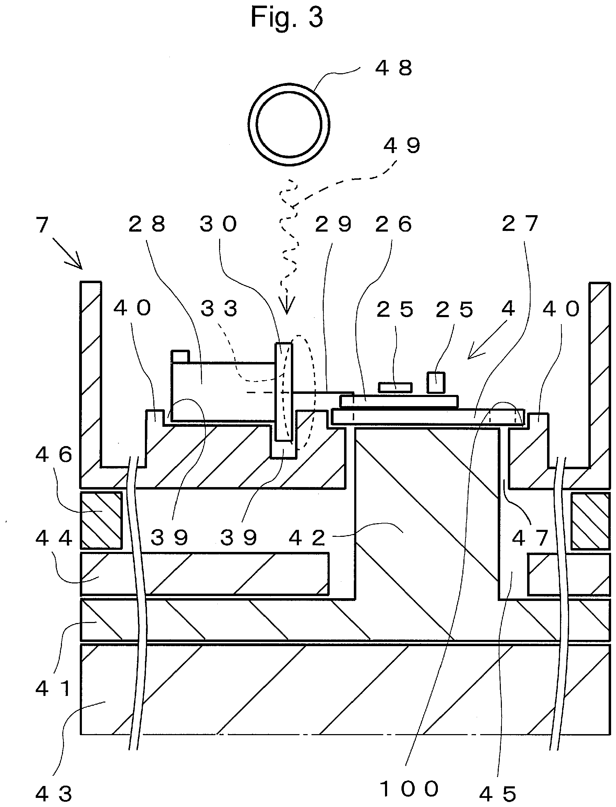

The first embodiment of the resin-sealing apparatus and the resin-sealing method according to the present invention will be described with reference to Figs. 1A through 3. Fig. 1A(1) is a schematic plain view of the resin-sealing apparatus according to the first embodiment of the present invention, and Fig. 1A(2) is a schematic plain view showing resin-sealed products which have been formed by resin-sealing pre-sealed substrates with a resin-sealing mold of the present resin-sealing apparatus. Figs. 2(1) and 2(2) are respectively a plain view and a front view, showing a pre-sealed substrate as an object of the resin-sealing method according to the present invention. Figs. 2(3) and 2(4) are respectively a plain view and a front view, showing a package completed by the resin-sealing method. Fig. 3 is a partial front sectional view showing the state in which a pre-sealed substrate placed on a tray is being pre-heated. Every figure is schematically illustrated with an appropriate omission or exaggeration for clarification.

As shown in Fig. 1A, the resin-sealing apparatus includes a pretreatment unit 1, a resin-sealing unit 2, and a post-process unit 3. The pretreatment unit 1 receives a pre-sealed substrate 4 from the previous process. The resin-sealing unit 2 receives the pre-sealed substrate 4 from the pretreatment unit 1, and resin-seals the pre-sealed substrate 4 to form a resin-sealed product 5. Fig. 1A(2) is a magnified view of the area A in Fig. 1A(1), and shows four resin-sealed products 5. The post-process unit 3 receives the resin-sealed products 5 from the resin-sealing unit 2, performs a predetermined post-process to the resin-sealed products 5 to complete packages 6 of the individual electronic units, and delivers the packages 6 to the subsequent stage.

The tray 7 is a jig used in carrying a pre-sealed substrate 4, and is a rectangular box container on which one or more pre-sealed substrates 4 received from the previous process are placed. The tray 7 is deep enough to completely contain the pre-sealed substrates 4 inside it (refer to Fig. 3). Fig. 1A shows an example in which four pre-sealed substrates 4 are placed on one tray 7.

The pretreatment unit 1 is composed of a receiving unit 8, a preheating unit 9, a tray cooling unit 10, and a tray storing unit 11. The receiving unit 8 places pre-sealed substrates 4 received from the previous process in a predetermined position on the tray 7. The preheating unit 9 receives the tray 7 from the receiving unit 8, and pre-heats the pre-sealed substrates 4 placed on the tray 7. The tray cooling unit 10 cools the empty tray 7 after the pre-heated pre-sealed substrates 4 have been carried to the resin-sealing unit 2. The tray storing unit 11 stores a stack of trays 7 which have been cooled to an appropriate temperature (e.g. almost room temperature).

The first transfer mechanism 12 transfers the tray 7 on which four pre-sealed substrates 4 are placed from the receiving unit 8 to the preheating unit 9. The second transfer mechanism 13 transfers an empty tray 7 to the tray storing unit 11 through the tray cooling unit 10 after the pre-heated pre-sealed substrates 4 have been carried to the resin-sealing unit 2. Both the first transfer mechanism 12 and the second transfer mechanism 13 have a plurality of hooks (not shown). In transferring the tray 7, these hooks are attached the tray 7 to hold it.

In the present embodiment, the preheating unit 9 includes three preheating mechanisms 14 provided along the X-direction in Fig. 1A. The explanation for the preheating mechanisms 14 will be provided later. First, the first transfer mechanism 12 transfers and places the tray 7, on which four pre-sealed substrates 4 are placed, on the preheating mechanism 14 that is located at the leftmost position among the three preheating mechanisms 14 in the figure. Then, the first transfer mechanism 12 moves and places the tray 7 sequentially on the remaining two preheating mechanisms 14. Through this process, the four pre-sealed substrates 4 placed on the tray 7 are gradually heated by the three preheating mechanisms 14. The tray cooling unit 10 includes three cooling mechanisms 15 along the X-direction in Fig. 1A.

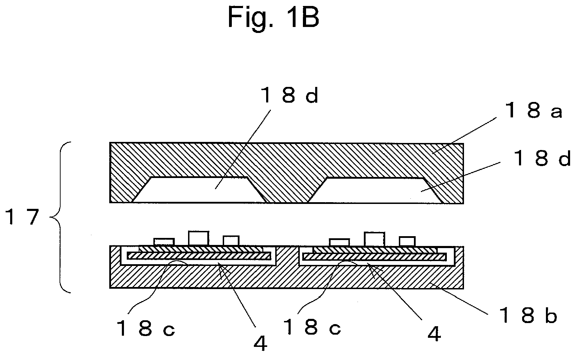

The resin-sealing unit 2 is composed of a carry-in mechanism 16, a resin-sealing mold 17, and a taking-out mechanism 19. The carry-in mechanism 16 hooks each of the four pre-heated pre-sealed substrates 4 which are placed on the tray 7 and carries them to the resin-sealing mold 17. The resin-sealing mold 17 consists of a pair of upper and lower dies 18a and 18b facing each other (refer to Fig. 1B). The taking-out mechanism 19 hooks each of the four resin-sealed products 5 and takes them out from the resin-sealing mold 17. The resin-sealing mold 17 may consist only of the upper and lower dies 18a and 18b, or it may further include an intermediate die. In the example of the present embodiment, four pre-sealed substrates 4 are placed on the lower die 18b (refer to Fig. 1A(1)).

The resin-sealing mold 17 is used to perform a resin sealing by using a commonly known transfer molding technology. The components of the resin-sealing mold 17 will be briefly described with reference to Fig. 1B. The lower die 18b is composed of: a pot (not shown) in which a resin material is stored; a plunger (not shown) which is fitted in the pot and vertically movable for pressing fluid resin; and substrate setting units 18c on which a pre-sealed substrate is placed. The upper die 18a is composed of a cull, which is a space in which the fluid resin formed by melting the resin material flows; a runner through which the fluid resin is transferred; and a cavity 18d, which is a space filled with the fluid resin.

The post-process unit 3 is composed of a reception unit 20, a separation unit 21, and a delivery unit 23, along the Y-direction in Fig. 1A. The reception unit 20 receives the resin-sealed products 5 from the resin-sealing unit 2. The separation unit 21 separates unnecessary parts from the resin-sealed products 5 (which will be described later) to form packages 6 of the individual electronic units. The separation unit 21 has a separation jig 22. The delivery unit 23 delivers the four packages 6 to the subsequent process. A delivery palette 24 is provided in the delivery unit 23, and the packages 6 contained in the delivery palette 24 are delivered to the subsequent process such as an appearance examination process or a curing process by a heat treatment.

Hereinafter, the explanations for the pre-sealed substrate 4, the resin-sealed product 5, and the package 6 are provided with reference to Figs. 1A(2) and 2. First, the pre-sealed substrate 4 is described with reference to Fig. 2. As shown in Figs. 2(1) and 2(2), the pre-sealed substrate 4 is composed of: a circuit substrate 26 on which components 25 such as a semiconductor element, sensor, connector, and other units are mounted; and a heat-release member 27 formed by a copper plate or other element.

A connector 28 for providing and receiving the power and signal between the package 6 and the controller of the transportation equipment is attached to the circuit substrate 26. The connector 28 is composed of a pin 29 and a plastic housing (which will be referred to as the "body"). In addition, the connector 28 is attached to the circuit substrate 26 by fixing the pin 29 to a mounting hole of the circuit substrate 26. The fixation of the pin may be achieved by soldering, pressing, or other method. The connector 28 attached to the pre-sealed substrate 4 forms a projection in itself, and also has projections 30 and 31. The projection 30 is a portion to be grasped by an operator when plugging in or disconnecting a connector of the other side (i.e. the controller side of the transportation equipment), while the projection 31 is designed to prevent the connector of the other side from dropping off. The end of the side of the circuit substrate 26 in the body of the connector 28 serves as a boundary 33 with the sealing resin 32 of the package 6.

The heat-release member 27 also serves as an attachment member for attaching a completed package 6 to the transportation equipment. To this end, an attachment hole 34 is provided in the heat-release member 27.

Next, the resin-sealed product 5 will be described with reference to Figs. 1A(2) and 2. The resin-sealed product 5 has a sealing resin 32 made of a cured resin. As shown in Fig. 2, the sealing resin 32 completely covers the pin 29 of the connector 28, the circuit substrate 26, and the components 25 attached to the circuit substrate 26. In addition, as shown in Fig. 1A(2), the resin-sealed product 5 has a cull portion 35 and a runner portion 36 composed of the cured resins formed by the cull and runner (both not shown) of the resin-sealing mold 17. The cull portion 35 and the runner portion 36 together form an unnecessary resin 37.

The package 6 will be described with reference to Figs. 2(3) and 2(4). The package 6 shown in Figs. 2(3) and 2(4) is finished by separating the unnecessary resin 37 from the resin-sealed product 5 which is shown in Fig. 1A(2). In the package 6, a sealing resin 32 is formed in such a manner as to completely cover the pin 29 of the connector 28, the circuit substrate 26, and the components 25 attached to the circuit substrate 26. The sealing resin 32 is a thermosetting resin, for example, such as an epoxy resin or silicon resin. The material used for the sealing resin 32 is a resin that satisfies the required properties in terms of the resistance to high temperature, resistance to low temperature, resistance to moisture, insulation property, mechanical strength, or other factors. In addition, a projection 38 is provided in the sealing resin 32 with the aim of ensuring a sufficient mechanical strength and for other purpose.

Hereinafter, the tray 7 and the preheating mechanism 14 for pre-heating the four pre-sealed substrates 4 placed on the tray 7 are described with reference to Fig. 3.

As shown in Fig. 3, a convex frame 40 is provided in order that the pre-sealed substrates 4 are stably placed and will remain in their set position after they are placed. A recess 100 corresponding to the heat-release member 27 of the pre-sealed substrate 4 is provided inside the frame 40 of the tray 7. The recess 100 has an opening 47. In addition, inside the frame 40 of the tray 7, a recess 39 is provided which corresponds to both the projection 30 of the pre-sealed substrate 4 and the body of the connector 28 as a projection. Accordingly, the projection 30 of the pre-sealed substrate 4 and the lower portion of the body of the connector 28 as a projection are both contained in the recess 39. Thus, the tray 7 has a shape that fits the projection 30 and the pre-sealed substrate 4 having the body of the connector 28 as a projection.

The preheating mechanism 14 (refer to Fig. 1A(1)) is composed of heater blocks 41 as the first heater. In other words, three heater blocks 41 as the preheating mechanism 14 are provided in the preheating unit 9 (refer to Fig. 1A(1)). Each heater block 41 has four stand portions 42 corresponding to each of the four pre-sealed substrates 4. In addition, a heater such as a cartridge heater (not shown) is provided to each of the stand portions 42. That is, in each of the heater blocks 41, four stand portions 42 are provided each having a heater in such a manner as to correspond to the four pre-sealed substrates 4. In Fig. 3, only one stand portion 42 is illustrated and the other stand portions 42 are omitted.

Each of the heater blocks 41 is fixed to the base member 43 of the preheating unit 9 (refer to Fig. 1A(1)). A heat-insulation plate 44 made of fluororesin or other material having a low thermal conductivity is placed on the heater block 41. An opening 45 is provided in the heat-insulation plate 44, and the stand portion 42 of the heater block 41 projects out through the opening 45. A spacer 46 is provided on the heat-insulation plate 44. The spacer 46 may be composed of a frame or a plurality of columns. While the tray 7 with the pre-sealed substrate 4 placed thereon is set on the preheating unit 9 (refer to Fig. 1A), the stand portion 42 projects out through the opening 45 of the heat-insulation plate 44 and the opening 47 of the tray 7. The upper surface of the stand portion 42 comes in contact with the lower surface of the heat-release member 27 of the pre-sealed substrate 4.

The above-described configuration brings about the following effects while the tray 7 with the pre-sealed substrates 4 placed thereon is placed on the preheating unit 9. First, the heat generated by the heater block 41 is directly conducted through the stand portion 42 and the heat-release member 27 to the pre-sealed substrates 4. Second, the heater block 41 and the tray 7 are thermally insulated by the heat-insulation plate 44 and the spacer 46. Here, "the heater block 41 and the tray 7 are thermally insulated" means that the thermal conduction between the heater block 41 and the tray 7 is small enough to be ignored, excluding the thermal conduction around the stand portion 42 of the heater block 41. Third, the pre-sealed substrates 4 are gradually heated by the three heater blocks 41. Accordingly, pre-sealed substrates 4 are directly and gradually heated by the heater blocks 41, not through the tray 7. As a consequence, before being resin-sealed, the pre-sealed substrates 4 are efficiently pre-heated to a sufficient temperature without being thermally shocked. In addition, the connector 28 having a body made of a plastic with a low thermal conductivity is gradually heated. This decreases the temperature gradient at the boundary 33 between the sealing resin 32 (refer to Fig. 2) and the body of the connector 28. This increases the adhesion between the sealing resin 32 and the connector 28, suppressing the possibility of detachment of the sealing resin 32.

In the preheating unit 9, as shown in Fig. 3, it is preferable to provide an infrared lamp 48 as another preheating mechanism 14 above the pre-sealed substrates 4. As the first mode, the infrared lamp 48 may be preferably placed directly above the boundary 33 between the sealing resin 32 (refer to Fig. 2), which is to be formed after the pre-sealed substrates 4 are pre-heated, and the connector 28. Accordingly, the boundary 33 is irradiated with the infrared light 49 emitted from the infrared lamp 48 to heat without contact the connector 28 near the boundary 33. As a consequence, the pre-sealed substrates 4 are sent out from the preheating unit 9 (refer to Fig. 1A) with the connector 28 near the boundary 33 sufficiently pre-heated.

As the second mode, the infrared lamp 48 may be preferably placed above the last preheating mechanism 14 in the preheating unit 9, i.e. above the preheating mechanism 14 that is the closest to the resin-sealing unit 2. In this case, the connector 28 near the boundary 33 is pre-heated at the closest position to the resin-sealing unit 2 in the preheating unit 9.

Placing the infrared lamp 48 at the position which satisfies the aforementioned two conditions further decreases the temperature gradient at the boundary 33 between the connector 28 and the sealing resin 32 at the point in time immediately before the resin-sealing process, whereby the adhesion between the body of the connector 28 and the sealing resin 32 is further improved. Therefore, the possibility of detachment of the sealing resin 32 from the body of the connector 28 is further suppressed (refer to Figs. 2(3) and 2(4)).

Hereinafter, the resin-sealing method according to the present embodiment will be described with reference to Figs. 1A through 3. First, as shown in Fig. 1A, a plurality of trays 7 which have been manufactured to fit the pre-sealed substrate 4 are prepared. Then, these trays 7 are stacked on the tray storing unit 11.

Then, as shown in Fig. 1A, one tray 7 is transferred from the tray storing unit 11 to the receiving unit 8. In this process, the tray 7 may be transferred by an operator, or by using an appropriate transfer system.

Subsequently, four pre-sealed substrates 4 are placed on the tray 7. That is to say, each of the four pre-sealed substrates 4 is placed on the tray 7 so that the projection 30 and the body of the connector 28 as a projection of each of the pre-sealed substrates 4 and the recess 39 of the tray 7 are aligned. In this process, the four pre-sealed substrates 4 may be placed on the tray 7 by an operator, or by using an appropriate placing unit for clamping and placing the four pre-sealed substrates 4.

A plurality of trays 7 on each of which four pre-sealed substrates 4 are placed may be stacked beforehand in the tray storing unit 11. In this case, one tray 7 on which four pre-sealed substrates 4 are placed is transferred from the tray storing unit 11 to the receiving unit 8. Alternatively, one tray 7 on which four pre-sealed substrates 4 have been placed in the previous process may be transferred to the receiving unit 8.

Next, by using the first transfer mechanism 12, the tray 7 on which four pre-sealed substrates 4 are placed is transferred to the preheating unit 9 which includes three preheating mechanisms 14. As shown in Fig. 3, heater blocks 41 as the preheating mechanisms 14 are provided in the heating unit 9. The number of preheating mechanisms 14, i.e. the number of heater blocks 41, is three (refer to Fig. 1A). Then, by using the first transfer mechanism 12, the tray 7 on which the four pre-sealed substrates 4 are placed is transferred sequentially onto the three heater blocks 41. By this mechanism, the four pre-sealed substrates 4 placed on the tray 7 are gradually heated.

In at least one of the three preheating mechanisms 14, the boundary 33 is irradiated with the infrared light 49 by using the infrared lamp 48 (refer to Fig. 3). This pre-heats the connector 28 near the boundary 33 having a body made of a plastic with a low thermal conductivity.

Next, by using an appropriate transfer mechanism, the tray 7 on which the four pre-heated pre-sealed substrates 4 are placed is transferred from the preheating unit 9 to the tray cooling unit 10.

Then, by using the carry-in mechanism 16, the four pre-heated pre-sealed substrates 4 are taken out from the tray 7. After that, these pre-sealed substrates 4 are carried to the lower die 18b and placed on a predetermined substrate setting section 18c.

Next, each of the pre-sealed substrates 4 placed on the substrate setting section 18c is fixed to the die surface of the lower die 18b. Then, by clamping the resin-sealing mold 17, the components 25 (refer to Fig. 2) attached to the upper surface of each of the pre-sealed substrates 4 are contained in the cavity 18d provided in the upper die (not shown). After that, the cavity 18d is filled with fluid resin (not shown).

While the resin-sealing mold 17 is still clamped, the fluid resin is cured. As a consequence, a cured resin including the sealing resin 32 and the unnecessary resin 37 is formed (refer to Fig. 1A(2)).

Subsequently, the resin-sealing mold 17 is opened. Then, by using the taking-out mechanism 19, four resin-sealed products 5 are removed from the resin-sealing unit 2 and carried to the reception unit 20 of the post-process unit 3.

After that, by using an appropriate transfer mechanism, the four resin-sealed products 5 are transferred from the reception unit 20 to the separation unit 21. After that, in the separation unit 21, the unnecessary resin 37 (refer to Fig. 1A(2)) is separated from each of the resin-sealed products 5 by using the separation jig 22. This separation operation is performed by a commonly known method called gate-cutting or degating. By this process, four packages 6 are completed from the four resin-sealed products 5.

Subsequently, by using an appropriate transfer mechanism, the four packages 6 are transferred from the separation unit 21 to the delivery unit 23, where the packages 6 are contained in the delivery palette 24. Then, the packages 6 contained in the delivery palette 24 are delivered to the subsequent process such as an appearance examination process or a curing process by a heat treatment.

By the above-described processes, the pre-sealed substrates 4 received from the previous process are placed on the tray 7 and pre-heated. Then, the pre-heated resin-sealed substrates 4 are resin-sealed by using the resin-sealing mold 17 to form the resin-sealed products 5, and then the unnecessary resins 37 are separated from the resin-sealed products 5. In this manner, the packages 6 can be completed.

In the present embodiment, the tray 7 which fits the pre-sealed substrate 4 having an irregular shape is used, so that such a pre-sealed substrate 4 with an irregular shape can be stably carried to the resin-sealing mold 17.

Before being carried into the resin-sealing mold 17, the pre-sealed substrates 4 are directly and gradually heated by the plurality of heater blocks 41. Hence, the pre-sealed substrates 4 can be efficiently pre-heated to a sufficient temperature without undergoing a thermal shock. In addition, the connector 28 having a body made of a plastic with a low thermal conductivity is gradually heated. This can decrease the temperature gradient at the boundary 33 between the sealing resin 32 (refer to Fig. 2) and the body of the connector 28. Consequently, the adhesion between the sealing resin 32 and the connector 28 increases, which can suppress the possibility of the detachment of the sealing resin 32.

By using the infrared lamp 48, the portion around the boundary 33 in the connector 28 having the body made of a plastic with a low thermal conductivity can be sufficiently heated. This can further decrease the temperature gradient at the boundary 33 between the connector 28 and the sealing resin 32 at the point in time immediately before the resin-sealing process. Therefore, the adhesion between the body of the connector 28 and the sealing resin 32 is further increased, further suppressing the possibility of detachment of the sealing resin 32 from the body of the connector 28.

In the example of Fig. 1A(1), two resin-sealing units 2 are provided in the resin-sealing apparatus. Preferably, one resin-sealing unit 2 may be attachable and detachable either to the pretreatment unit 1 and another resin-sealing unit 2 or to the post-process unit 3 and another resin-sealing unit 2. With this configuration, one or more resin-sealing units 2 can be placed between the pretreatment unit 1 and the post-process unit 3 in the resin-sealing apparatus. Accordingly, the number of resin-sealing units 2 can be easily changed in accordance with the growth in demand, the product strategy of a user, or for other reason, even after the resin-sealing apparatus has been installed at the manufacturing facility of the user. This allows an easy adjustment of the manufacturing ability of the resin-sealing apparatus.

In the aforementioned embodiment, four pre-sealed substrates 4 are placed on one tray 7. The number of pre-sealed substrates 4 placed on one tray 7 is not limited to four; it may be one or any plural number other than four according to the dimension and shape of the pre-sealed substrate 4.

In the aforementioned embodiment, one tray 7 on which four pre-sealed substrates 4 are placed is transferred to one preheating mechanism 14 to be heated. The number of trays 7 transferred to the preheating mechanism 14 is not limited to one; a plurality of trays 7 may be simultaneously transferred to one preheating mechanism 14 and heated thereon. For example, a pair of trays 7 on each of which two pre-sealed substrates 4 are placed may be simultaneously transferred to one preheating mechanism 14 and heated thereon.

In the aforementioned embodiment, in the process of resin-sealing a pre-sealed substrate 4, the transfer molding method is used in which the fluid resin which has been produced by melting a resin material in a pot (not shown) is injected into the cavity 18d through the runner (not shown). However, the method of molding is not limited to the transfer molding method; an injection molding method or a compression molding method may be used.

In the case where a compression molding method is used, a cavity is provided in a lower die 18b, and a resin-sealing process is performed as follows. First, a resin material in a powdery, granular, or sheet-like form is supplied to the cavity. Then, the resin material is heated and melted to produce a fluid resin. Consequently, the cavity is filled with the fluid resin. Subsequently, the resin mold is clamped to immerse the components 25 attached to the lower surface of the pre-sealed substrate 4 which is fixed to the upper die into the fluid resin filling the cavity. Then, the fluid resin is continued to be heated and cured to form a cured resin. As a result of these processes, a resin-sealed product 5 is formed. Alternatively, a resin (liquid resin) which is in a liquid state at room temperature may be supplied to the cavity. The cavity can be filled with fluid resin also by this method.

In the example of the aforementioned embodiment, three preheating mechanisms 14, i.e. three heater blocks 41, are provided in the preheating unit 9. However, the number of preheating mechanisms 14 is not limited to three; it may be one or may be plural other than three. The number of preheating mechanisms 14 can be appropriately determined taking into account the target heating temperature, the speed of the resin-sealing process in the resin-sealing unit 2, and other factors.

In addition, in the aforementioned embodiment, the infrared lamp 48 is placed above the last preheating mechanism 14 (heater block 41) in the preheating unit 9. However, other configurations are possible. For example, the infrared lamp 48 may be provided above each of the plurality of preheating mechanisms 14 including the last preheating mechanism 14. In the case where there is not a sufficient space for placing the infrared lamp 48 above the last preheating mechanism 14, the infrared lamp 48 may be provided above the preheating mechanism 14 that is the closest to the last preheating mechanism 14 in the preheating unit 9.

Furthermore, the following step may be performed: while the tray 7 on which pre-sealed substrates 4 are placed is pre-heated, the identification information (ID information) on each of the pre-sealed substrates 4 is read and the identification information is sent to the resin-sealing apparatus or to the controller of a semiconductor manufacturing device in the later stage. In this step, a two-dimensional code or other information which has been previously marked on a circuit substrate 26 may be read by using a reading sensor. Further, based on the ID information sent to the controller of the semiconductor manufacturing device in the later stage, a two-dimensional code, character, symbol, or other information may be marked on the body of a connector 28 or on the surface of a sealing resin 32 after the resin-sealing process by using a laser or other method. Additionally, packages 6 may be checked based on the ID information sent to the controller of the semiconductor manufacturing device in the later stage.

### SECOND EMBODIMENT

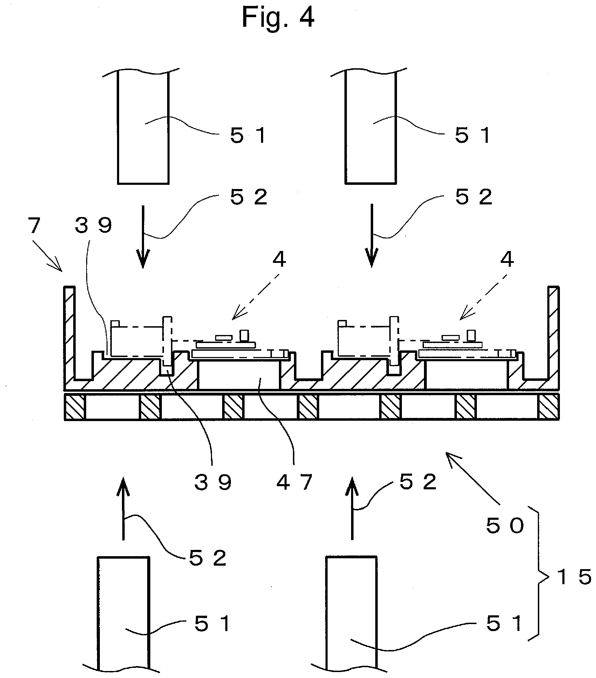

The second embodiment of the resin-sealing apparatus and the resin-sealing method according to the present invention will be described with reference to Figs. 1A and 4. The rough configuration of the resin-sealing apparatus according to the second embodiment is the same as that of the resin-sealing apparatus according to the first embodiment shown in Fig. 1A. Fig. 4 is a partial front sectional view showing a state in which an empty tray is forcibly cooled.

After pre-heated pre-sealed substrates 4 are carried to the resin-sealing unit 2, the tray 7 from which the heated pre-sealed substrates 4 have been taken out and became empty is cooled by the three cooling mechanisms 15 provided in the tray cooling unit 10. The empty tray 7 is transferred to each of the three cooling mechanisms 15 by the second transfer mechanism 13.

As shown in Fig. 4, a holding member 50 having net-like, duckboard-shaped, or grid-like openings with an appropriate dimension and shape is provided in each of the cooling mechanisms 15. A nozzle 51 for ejecting a gas is provided at least either above or below the holding member 50. In the example of Fig. 4, nozzles 51 are placed both above and below the holding member 50. The holding member 50 and the nozzles 51 together constitute the cooling mechanism 15. Trays 7 are placed on those holding members 50. The nozzle 51 is a cylindrical nozzle having a round opening on the tip thereof. A plurality of nozzles 51 are provided from the front side toward the rear side of Fig. 4. Alternatively, in place of the cylindrical nozzles, a long and thin rectangular parallelepiped nozzle extending along the depth direction of Fig. 4, having a rectangular opening on the top end thereof, may be used.

The number of nozzles 51 provided above or below one tray 7 may be one, depending on the dimension and shape of the tray 7. Or, a plurality of nozzles 51 may be provided above or below one tray 7, as shown in Fig. 4. Preferably, the nozzles 51 may be provided both above and below the tray 7, as shown in Fig. 4.

In the present embodiment, by using the nozzle 51, a gas 52 is blown at the tray 7 from above or below the holding member 50. Consequently, the empty tray 7 is sequentially and forcibly cooled (air-cooled). Then, after the empty tray 7 has been cooled to an appropriate temperature (e.g. approximately room temperature), the cooled tray 7 is transferred to the tray storing unit 11.

In the present embodiment, a tray 7 which has been pre-heated together with four pre-sealed substrates 4 in the process of pre-heating the four pre-sealed substrates 4 is sequentially and forcibly cooled by using three cooling mechanisms 15. After being quickly cooled, the empty tray 7 is transferred to the tray storing unit 11. Therefore, the tray 7 can be quickly circulated between the receiving unit 8 and the tray storing unit 11, which allows an efficient resin sealing of pre-sealed substrates 4 with a small number of trays 7.

The gas 52 to be blown at the tray 7 may be a gas used in a semiconductor manufacturing process, such as compressed air. The gas 52 blown at the tray 7 may be at room temperature or cooled. The use of cooled gas results in the quicker cooling of an empty tray 7.

In the first embodiment, a tray is sequentially moved to and placed on the plurality of preheating mechanisms to gradually heat the tray. Alternatively, a tray may be placed on each of the plurality of preheating mechanisms and then taken out after being sufficiently pre-heated. In the second embodiment, a tray is sequentially moved to and placed on the plurality of cooling mechanisms to gradually cool the tray. Alternatively, a tray may be placed on each of the plurality of cooling mechanisms and then taken out after being sufficiently cooled. In these cases, the tray first placed may be first taken out, i.e. the so-called First In, First Out (FIFO) method can be used.

In the embodiments described thus far, the present invention is used for manufacturing an electronic circuit for transportation equipment. However, the present invention is not limited to a manufacture of an electronic circuit for transportation equipment. In short, the present invention can be used in any case where a pre-sealed substrate having an irregular shape is resin-sealed to manufacture an electronic unit.

It should be noted that the present invention is not limited to each previously-described embodiment, and can be arbitrarily and appropriately combined, changed or selected according to necessity without any departure from the scope of the present invention as defined in the claims.

### EXPLANATION OF NUMERALS

1 ... Pretreatment Unit
2 ... Resin-Sealing Unit
3 ... Post-Process Unit
4 ... Pre-Sealed Substrate
5 ... Resin-Sealed Product
6 ... Package (Electronic Unit)
7 ... Tray
8 ... Receiving Unit
9 ... Preheating Unit
10 ... Tray Cooling Unit
11 ... Tray Storing Unit (Storing Mechanism)
12 ... First Transfer Mechanism
13 ... Second Transfer Mechanism
14 ... Preheating Mechanism
15 ... Cooling Mechanism
16 ... Carry-In Mechanism
17 ... Resin-Sealing Mold
18a ... Upper Die
18b ... Lower Die
18c ... Substrate Setting Section

18d ... Cavity
19 ... Taking-Out Mechanism
20 ... Reception Unit
21 ... Separation Unit
22 ... Separation Jig (Separation Mechanism)
23 ... Delivery Unit
24 ... Delivery Palette
25 ... Component
26 ... Circuit Substrate
27 ... Heat-Release Member
28 ... Connector
29 ... Pin
30, 31, 38 ... Projection
32 ... Sealing Resin
33 ... Boundary
34 ... Attachment Hole
35 ... Cull Portion
36 ... Runner Portion
37 ... Unnecessary Resin
39 ... Recess
40 ... Frame
41 ... Heater Block (Preheating Mechanism)
42 ... Stand Portion
43 ... Base Member
44 ... Heat-Insulation Plate
45, 47 ... Opening
46 ... Spacer
48 ... Infrared Lamp (Preheating Mechanism)
49 ... Infrared Light
50 ... Holding Member (Cooling Mechanism)
51 ... Nozzle (Cooling Mechanism)
52 ... Gas
100 ... Recess

## Claims

1. A resin-sealing apparatus used for manufacturing an electronic unit by collectively resin-sealing a plurality of components on a pre-sealed substrate having a circuit substrate and the plurality of components mounted on the circuit substrate, the components including at least a connector with a projection, comprising:
a tray on which the aforementioned one or more pre-sealed substrates can be placed;
a preheating mechanism for pre-heating the tray on which the aforementioned one or more pre-sealed substrates are placed;
a first transfer mechanism for transferring the tray on which the aforementioned one or more pre-sealed substrates are placed to the preheating mechanism and placing the tray on the preheating mechanism;
a resin-sealing mold having a cavity which is to be filled with fluid resin and aforementioned one or more substrate setting portions on which the aforementioned one or more pre-sealed substrate can be placed;
a carry-in mechanism for taking out the pre-heated one or more pre-sealed substrates from the tray and placing the aforementioned one or more pre-sealed substrates respectively to the substrate setting portions of the resin-sealing mold; and
a taking-out mechanism for taking out, from the resin-sealing mold, one or more resin-sealed products formed by resin-sealing each of the aforementioned one or more pre-sealed substrates with a cured resin which is formed by curing the fluid resin filling the cavity, wherein:
a recess corresponding to the projection of each of the aforementioned one ore more pre-sealed substrate is provided in the tray; and
the aforementioned one or more pre-sealed substrates can be placed on the tray, with the projection and the recess being aligned.

2. A resin-sealing apparatus used in manufacturing an electronic unit by collectively resin-sealing a plurality of components on a pre-sealed substrate having a circuit substrate and the plurality of components mounted on the circuit substrate, comprising:
a tray on which the aforementioned one or more pre-sealed substrates are placed;
a preheating mechanism for pre-heating the tray on which the aforementioned one or more pre-sealed substrates can be placed;
a first transfer mechanism for transferring the tray on which the aforementioned one or more pre-sealed substrates are placed to the preheating mechanism and placing the tray on the preheating mechanism;
a resin-sealing mold having a cavity which is to be filled with fluid resin and one or more substrate setting portions on which the aforementioned one or more pre-sealed substrate can be placed;
a carry-in mechanism for taking out the pre-heated one or more pre-sealed substrates from the tray and placing the aforementioned one or more pre-sealed substrates respectively to the substrate setting portions of the resin-sealing mold; and
a taking-out mechanism for taking out, from the resin-sealing mold, one or more resin-sealed products formed by resin-sealing each of the aforementioned one or more pre-sealed substrates with a cured resin which is formed by curing the fluid resin filling the cavity, wherein:
a recess corresponding to a shape of the pre-sealed substrate and an opening overlapping at least a portion of the pre-sealed substrate placed on the tray are provided in the tray;
the aforementioned one or more pre-sealed substrates can be placed on the tray, with each of the aforementioned one or more pre-sealed substrate and the recess being aligned; and
the preheating mechanism includes one or more stand portions each of which incorporates a first heater, and each of which is placed in the opening and comes in contact with each of the aforementioned one or more pre-sealed substrates when the tray is placed on the preheating mechanism.

3. The resin-sealing apparatus according to either claim 1 or 2, comprising a plurality of aforementioned preheating mechanisms.

4. The resin-sealing apparatus according to any one of claims 1 through 3, wherein:
the preheating mechanism has one or more second heaters for pre-heating each of the aforementioned one or more pre-sealed substrates; and
each of the aforementioned one or more second heaters emits infrared light onto a boundary between an area having a low thermal conductivity and an area to be resin-sealed with the cured resin in each of the aforementioned one or more pre-sealed substrates.

5. A resin-sealing apparatus according to any one of claims 1 through 4, comprising:
a cooling mechanism for cooling the tray from which the aforementioned one or more pre-sealed substrates have been taken out;
a second transfer mechanism for carrying the tray from which the aforementioned one or more pre-sealed substrates have been taken out to the cooling mechanism; and
a storing mechanism for storing the cooled tray, wherein:
the aforementioned one or more pre-sealed substrates are placed on the tray taken out from the storing mechanism.

6. The resin-sealing apparatus according to claim 5, comprising a plurality of aforementioned cooling mechanisms.

7. The resin-sealing apparatus according to any one of claims 1 through 6, comprising a separation mechanism for separating an unnecessary resin composed of an unnecessary part of the cured resin from each of the aforementioned one or more resin-sealed products.

8. A resin-sealing method used in manufacturing an electronic unit by collectively resin-sealing a plurality of components on a pre-sealed substrate having a circuit substrate and the plurality of components mounted on the circuit substrate, the components including at least a connector with a projection, and the method comprising the steps of:
preparing a tray on which the aforementioned one or more pre-sealed substrates are placed;
transferring the tray on which the aforementioned one or more pre-sealed substrates are placed to a preheating mechanism and placing the tray on the preheating mechanism;
pre-heating the aforementioned one or more pre-sealed substrates;
taking out the pre-heated one or more pre-sealed substrates from the tray, carrying the pre-heated one or more pre-sealed substrates to a resin-sealing mold, and placing the aforementioned one or more pre-sealed substrates to a predetermined position in the resin-sealing mold;
dipping the plurality of components into fluid resin filling a cavity provided in the resin-sealing mold;
curing the fluid resin filling the cavity to form a cured resin; and
taking out, from the resin-sealing mold, one or more resin-sealed products formed by resin-sealing each of the aforementioned one or more pre-sealed substrates, wherein:
the tray has a recess corresponding to the projection of the each of the aforementioned one ore more pre-sealed substrates; and
the step of preparing a tray comprises aligning the projection and the recess and placing the aforementioned one or more pre-sealed substrates on the tray.

9. A resin-sealing method used in manufacturing an electronic unit by collectively resin-sealing a plurality of components on a pre-sealed substrate having a circuit substrate and the plurality of components mounted on the circuit substrate, comprising the steps of:
preparing a tray on which the aforementioned one or more pre-sealed substrates are placed;
transferring the tray on which the aforementioned one or more pre-sealed substrates are placed to a preheating mechanism and placing the tray on the preheating mechanism;
pre-heating the aforementioned one or more pre-sealed substrates;
taking out the pre-heated one or more pre-sealed substrates from the tray, carrying the pre-heated one or more pre-sealed substrates to a resin-sealing mold, and placing the aforementioned one or more pre-sealed substrates to a predetermined position in the resin-sealing mold;
dipping the plurality of components into fluid resin filling a cavity provided in the resin-sealing mold;
curing the fluid resin filling the cavity to form a cured resin; and
taking out, from the resin-sealing mold, one or more resin-sealed products formed by resin-sealing each of the aforementioned one or more pre-sealed substrates, wherein:
the tray has a recess corresponding to a shape of each of the aforementioned one or more pre-sealed substrates and an opening overlapping at least a portion of each of the aforementioned one or more pre-sealed substrates placed on the tray;
the preheating mechanism has one or more stand portions each of which incorporates a first heater;
the step of preparing a tray comprises aligning the aforementioned one or more pre-sealed substrate and the recess and placing the aforementioned one or more pre-sealed substrates on the tray; and
the step of preheating comprises placing each of the aforementioned one or more stand portions in the opening so that the aforementioned one or more pre-sealed substrates placed on the tray respectively come into contact with the stand portions and are thereby individually and directly pre-heated.

10. The resin-sealing method according to either claim 8 or 9, wherein:
the step of placing the tray on the preheating mechanism comprises placing one tray sequentially on a plurality of aforementioned preheating mechanisms or placing each of a plurality of aforementioned trays on the plurality of aforementioned preheating mechanisms, and gradually heating the tray or trays.

11. The resin-sealing method according to any one of claims 8 through 10, wherein:
the preheating mechanism has one or more second heaters for pre-heating each of the aforementioned one or more pre-sealed substrates; and
in the step of preheating, each of the aforementioned one or more second heaters emits infrared light onto a boundary between an area having a low thermal conductivity and an area to be resin-sealed with the cured resin in each of the aforementioned one or more pre-sealed substrates.

12. The resin-sealing method according to any one of claims 8 through 11, comprising the steps of:
carrying the tray from which the aforementioned one or more pre-sealed substrates have been taken out to the cooling mechanism;
cooling the tray from which the aforementioned one or more pre-sealed substrates have been taken out, by means of the cooling mechanism; and
storing the cooled tray.

13. The resin-sealing method according to claim 12, wherein:
the step of cooling the tray comprises placing one aforementioned tray sequentially on the plurality of cooling mechanisms or placing each of a plurality of aforementioned trays on the plurality of cooling mechanisms, and then gradually cooling the tray or trays.

14. The resin-sealing method according to any one of claims 8 through 13, comprising the step of separating an unnecessary resin composed of an unnecessary part of the cured resin from the resin-sealed product.

## Patentansprüche

1. Eine Harzversiegelungsvorrichtung, welche verwendet wird zur Herstellung einer elektronischen Einheit durch gemeinsames Harzversiegeln einer Mehrzahl von Komponenten auf einem vorversiegelten Substrat, welches ein Schaltungssubstrat und die Mehrzahl von Komponenten, welche auf dem Schaltungssubstrat montiert sind, aufweist, wobei die Komponenten mindestens einen Verbinder mit einem Vorsprung umfassen, umfassend:
ein Tray, auf welchem das eine oder die mehreren vorgenannten vorversiegelten Substrate platziert werden können;
einen Vorwärmmechanismus zum Vorwärmen des Tray, auf welchem das eine oder die mehreren vorgenannten vorversiegelten Substrate platziert sind;
einen ersten Transfermechanismus zum Transferieren des Tray, auf welchem das eine oder die mehreren vorgenannten vorversiegelten Substrate platziert sind, zu dem Vorwärmmechanismus und zum Platzieren des Tray an dem Vorwärmmechanismus;
eine Harzversiegelungsform mit einer Kavität, welche mit einem fluiden Harz zu füllen ist, und einem oder mehreren vorgenannten Substrat-Setzbereichen, an welchen das eine oder die mehreren vorgenannten vorversiegelten Substrate platziert werden können;
einen Eintragmechanismus zum Entnehmen des einen oder der mehreren vorgewärmten vorversiegelten Substrate aus dem Tray und Platzieren des einen bzw. der mehreren vorgenannten vorversiegelten Substrate an den Substrat-Setzbereichen der Harzversiegelungsform; und
einen Entnahmemechanismus zum Entnehmen eines oder mehrerer harzversiegelter Produkte aus der Harzversiegelungsform, welche harzversiegelten Produkte gebildet sind durch Harzversiegeln jeweils des einen oder der mehreren vorgenannten vorversiegelten Substrate mit einem gehärteten Harz, welches durch Härten des die Kavität füllenden fluiden Harzes gebildet wird, wobei:
in dem Tray eine Ausnehmung bereitgestellt ist, welche zu dem Vorsprung jeweils des einen oder der mehreren vorgenannten vorversiegelten Substrate, korrespondiert; und
das eine oder die mehreren vorgenannten vorversiegelten Substrate mit dem Vorsprung und der Ausnehmung zueinander ausgerichtet auf dem Tray platziert werden können.

2. Eine Harzversiegelungsvorrichtung, welche verwendet wird bei der Herstellung einer elektronischen Einheit durch gemeinsames Harzversiegeln einer Mehrzahl von Komponenten auf einem vorversiegelten Substrat, welches ein Schaltungssubstrat und die Mehrzahl von Komponenten, welche auf dem Schaltungssubstrat montiert sind, aufweist, umfassend:
ein Tray, auf welchem das eine oder die mehreren vorgenannten vorversiegelten Substrate platziert werden;
einen Vorwärmmechanismus zum Vorwärmen des Tray, auf welchem das eine oder die mehreren vorgenannten vorversiegelten Substrate platziert werden können;
einen ersten Transfermechanismus zum Transferieren des Tray, auf welchem das eine oder die mehreren vorgenannten vorversiegelten Substrate platziert sind, zu dem Vorwärmmechanismus und zum Platzieren des Tray an dem Vorwärmmechanismus;
eine Harzversiegelungsform mit einer Kavität, welche mit einem fluiden Harz zu füllen ist, und einem oder mehreren Substrat-Setzbereichen, an welchen das eine oder die mehreren vorgenannten vorversiegelten Substrate platziert werden können;
einen Eintragmechanismus zum Entnehmen des einen oder der mehreren vorgewärmten vorversiegelten Substrate aus dem Tray und Platzieren des einen bzw. der mehreren vorgenannten vorversiegelten Substrate an den Substrat-Setzbereichen der Harzversiegelungsform; und
einen Entnahmemechanismus zum Entnehmen eines oder mehrerer harzversiegelter Produkte aus der Harzversiegelungsform, welche harzversiegelten Produkte gebildet sind durch Harzversiegeln jeweils des einen oder der mehreren vorgenannten vorversiegelten Substrate mit einem gehärteten Harz, welches durch Härten des die Kavität füllenden fluiden Harzes gebildet wird, wobei:
in dem Tray eine Ausnehmung, welche zu einer Form des vorversiegelten Substrats korrespondiert, und eine Öffnung, welche mindestens einen Teil des auf dem Tray platzierten vorversiegelten Substrats überlappt, bereitgestellt sind;
das eine oder die mehreren vorgenannten vorversiegelten Substrate mit jeweils dem einen oder den mehreren vorgenannten vorversiegelten Substraten und der Ausnehmung zueinander ausgerichtet auf dem Tray platziert werden können; und
der Vorwärmmechanismus einen oder mehrere Ständerbereiche umfasst, welche jeweils eine erste Heizeinrichtung umfassen und jeweils in der Öffnung platziert sind und mit jeweils dem einen oder den mehreren vorgenannten vorversiegelten Substraten in Kontakt kommen, wenn das Tray an dem Vorwärmmechanismus platziert wird.

3. Die Harzversiegelungsvorrichtung nach Anspruch 1 oder 2, umfassend eine Mehrzahl von vorgenannten Vorwärmmechanismen.

4. Die Harzversiegelungsvorrichtung nach einem der Ansprüche 1 bis 3, wobei:
der Vorwärmmechanismus eine oder mehrere zweite Heizeinrichtungen aufweist zum Vorwärmen jeweils des einen oder der mehreren vorgenannten vorversiegelten Substrate; und
die eine oder die mehreren vorgenannten zweiten Heizeinrichtungen jeweils Infrarotlicht auf eine Grenzfläche zwischen einem Bereich mit niedriger Wärmeleitfähigkeit und einem Bereich, welcher mit dem gehärteten Harz harzversiegelt werden soll, in jeweils dem einen oder den mehreren vorgenannten vorversiegelten Substraten emittieren.

5. Eine Harzversiegelungsvorrichtung nach einem der Ansprüche 1 bis 4, umfassend:
einen Kühlmechanismus zum Kühlen des Tray, aus welchem das eine oder die mehreren vorgenannten vorversiegelten Substrate entnommen wurden;
einen zweiten Transfermechanismus zum Transportieren des Tray, aus welchem das eine oder die mehreren vorgenannten vorversiegelten Substrate entnommen wurden, zu dem Kühlmechanismus; und
einen Speichermechanismus zum Speichern des gekühlten Tray, wobei:
das eine oder die mehreren vorgenannten vorversiegelten Substrate auf dem Tray platziert werden, welches aus dem Speichermechanismus entnommen wird.

6. Die Harzversiegelungsvorrichtung nach Anspruch 5, umfassend eine Mehrzahl von vorgenannten Kühlmechanismen.

7. Die Harzversiegelungsvorrichtung nach einem der Ansprüche 1 bis 6, umfassend einen Trennmechanismus zum Abtrennen eines unnötigen Harzes, bestehend aus einem unnötigen Teil des gehärteten Harzes, von jeweils dem einem oder den mehreren vorgenannten harzversiegelten Produkten.

8. Ein Harzversiegelungsverfahren, welches verwendet wird bei der Herstellung einer elektronischen Einheit durch gemeinsames Harzversiegeln einer Mehrzahl von Komponenten auf einem vorversiegelten Substrat, welches ein Schaltungssubstrat und die Mehrzahl von Komponenten, welche auf dem Schaltungssubstrat montiert sind, aufweist, wobei die Komponenten mindestens einen Verbinder mit einem Vorsprung umfassen und wobei das Verfahren die Schritte umfasst:
Bereitstellen eines Tray, auf welchem das eine oder die mehreren vorgenannten vorversiegelten Substrate platziert werden;
Transferieren des Tray, auf welchem das eine oder die mehreren vorgenannten vorversiegelten Substrate platziert sind, zu einem Vorwärmmechanismus und Platzieren des Tray an dem Vorwärmmechanismus;
Vorwärmen des einen oder der mehreren vorgenannten vorversiegelten Substrate;
Entnehmen des einen oder der mehreren vorgewärmten vorversiegelten Substrate aus dem Tray, Transportieren des einen oder der mehreren vorgewärmten vorversiegelten Substrate zu einer Harzversiegelungsform und Platzieren des einen oder der mehreren vorgenannten vorversiegelten Substrate an einer vorbestimmten Position in der Harzversiegelungsform;
Eintauchen der Mehrzahl von Komponenten in ein fluides Harz, welches eine Kavität füllt, welche in der Harzversiegelungsform bereitgestellt ist;
Härten des die Kavität füllenden fluiden Harzes, um ein gehärtetes Harz zu bilden; und
Entnehmen eines oder mehrerer harzversiegelter Produkte aus der Harzversiegelungsform, welche harzversiegelten Produkte gebildet sind durch Harzversiegeln jeweils des einen oder der mehreren vorgenannten vorversiegelten Substrate, wobei:
das Tray eine Ausnehmung aufweist, welche zu dem Vorsprung jeweils des einen oder der mehreren vorgenannten vorversiegelten Substrate korrespondiert; und
der Schritt des Bereitstellens eines Tray umfasst: Zueinanderausrichten des Vorsprungs und der Ausnehmung und Platzieren des einen oder der mehreren vorgenannten vorversiegelten Substrate auf dem Tray.

9. Ein Harzversiegelungsverfahren, welches verwendet wird bei der Herstellung einer elektronischen Einheit durch gemeinsames Harzversiegeln einer Mehrzahl von Komponenten auf einem vorversiegelten Substrat, welches ein Schaltungssubstrat und die Mehrzahl von Komponenten, welche auf dem Schaltungssubstrat montiert sind, aufweist, wobei das Verfahren die Schritte umfasst:
Bereitstellen eines Tray, auf welchem das eine oder die mehreren vorgenannten vorversiegelten Substrate platziert werden;
Transferieren des Tray, auf welchem das eine oder die mehreren vorgenannten vorversiegelten Substrate platziert sind, zu einem Vorwärmmechanismus und Platzieren des Tray an dem Vorwärmmechanismus;
Vorwärmen des einen oder der mehreren vorgenannten vorversiegelten Substrate;
Entnehmen des einen oder der mehreren vorgewärmten vorversiegelten Substrate aus dem Tray, Transportieren des einen oder der mehreren vorgewärmten vorversiegelten Substrate zu einer Harzversiegelungsform und Platzieren des einen oder der mehreren vorgenannten vorversiegelten Substrate an einer vorbestimmten Position in der Harzversiegelungsform;
Eintauchen der Mehrzahl von Komponenten in ein fluides Harz, welches eine Kavität füllt, welche in der Harzversiegelungsform bereitgestellt ist;
Härten des die Kavität füllenden fluiden Harzes, um ein gehärtetes Harz zu bilden; und
Entnehmen eines oder mehrerer harzversiegelter Produkte aus der Harzversiegelungsform, welche harzversiegelten Produkte gebildet sind durch Harzversiegeln jeweils des einen oder der mehreren vorgenannten vorversiegelten Substrate, wobei:
das Tray eine Ausnehmung aufweist, welche zu einer Form jeweils des einen oder der mehreren vorgenannten vorversiegelten Substrate korrespondiert, und eine Öffnung aufweist, welche mindestens einen Teil jeweils des einen oder der mehreren vorgenannten vorversiegelten Substrate, welche auf dem Tray platziert sind, überlappt;
der Vorwärmmechanismus einen oder mehrere Ständerbereiche aufweist, welche jeweils eine erste Heizeinrichtung umfassen;
der Schritt des Bereitstellens eines Tray umfasst: Zueinanderausrichten des einen oder der mehreren vorgenannten vorversiegelten Substrate und der Ausnehmung und Platzieren des einen oder der mehreren vorgenannten vorversiegelten Substrate auf dem Tray; und
der Schritt des Vorwärmens umfasst: Platzieren jeweils des einen oder der mehreren vorgenannten Ständerbereiche in der Öffnung, so dass das eine bzw. die mehreren vorgenannten vorversiegelten Substrate, welche auf dem Tray platziert sind, mit den Ständerbereichen in Kontakt kommen und dadurch individuell und direkt vorgewärmt werden.

10. Das Harzversiegelungsverfahren nach Anspruch 8 oder 9, wobei:
der Schritt des Platzierens des Tray an dem Vorwärmmechanismus umfasst: Platzieren eines Tray nacheinander folgend an einer Mehrzahl von vorgenannten Vorwärmmechanismen oder Platzieren jedes von einer Mehrzahl von vorgenannten Trays an der Mehrzahl von vorgenannten Vorwärmmechanismen und allmähliches Erwärmen des einen oder der mehreren Trays.

11. Das Harzversiegelungsverfahren nach einem der Ansprüche 8 bis 10, wobei:
der Vorwärmmechanismus eine oder mehrere zweite Heizeinrichtungen aufweist zum Vorwärmen jeweils des einen oder der mehreren vorgenannten vorversiegelten Substrate; und
in dem Schritt des Vorwärmens die eine oder die mehreren vorgenannten zweiten Heizeinrichtungen jeweils Infrarotlicht auf eine Grenzfläche zwischen einem Bereich mit niedriger Wärmeleitfähigkeit und einem Bereich, welcher mit dem gehärteten Harz harzversiegelt werden soll, in jeweils dem einen oder den mehreren vorgenannten vorversiegelten Substraten emittieren.

12. Das Harzversiegelungsverfahren nach einem der Ansprüche 8 bis 11, umfassend die Schritte:
Transportieren des Tray, aus welchem das eine oder die mehreren vorgenannten vorversiegelten Substrate entnommen wurden, zu dem Kühlmechanismus;
Kühlen des Tray, aus welchem das eine oder die mehreren vorgenannten vorversiegelten Substrate entnommen wurden, mittels des Kühlmechanismus; und
Speichern des gekühlten Tray.

13. Das Harzversiegelungsverfahren nach Anspruch 12, wobei:
der Schritt des Kühlens des Tray umfasst: Platzieren eines vorgenannten Tray nacheinander folgend an der Mehrzahl von Kühlmechanismen oder Platzieren jedes von einer Mehrzahl von vorgenannten Trays an der Mehrzahl von Kühlmechanismen, gefolgt von allmählichem Kühlen des einen oder der mehreren Trays.

14. Das Harzversiegelungsverfahren nach einem der Ansprüche 8 bis 13, umfassend den Schritt des Abtrennens eines unnötigen Harzes, bestehend aus einem unnötigen Teil des gehärteten Harzes, von dem harzversiegelten Produkt.

## Revendications

1. Dispositif de scellement par une résine utilisé pour la fabrication d'une unité électronique par scellement collectif par une résine d'une pluralité de composants sur un substrat pré-scellé ayant un substrat de circuit et la pluralité de composants montés sur le substrat de circuit, les composants comprenant au moins un connecteur avec une saillie, comprenant :
un plateau sur lequel le ou les substrats pré-scellés susmentionnés peuvent être placés ;
un mécanisme de préchauffage pour préchauffer le plateau sur lequel sont placés le ou les substrats pré-scellés susmentionnés ;
un premier mécanisme de transfert pour transférer au mécanisme de préchauffage le plateau sur lequel sont placés le ou les substrats pré-scellés susmentionnés, et placer le plateau sur le mécanisme de préchauffage ;
un moule de scellement par une résine ayant une cavité qui est destinée à être remplie par une résine fluide et le ou les parties de prise de substrat susmentionnées sur lesquelles peuvent être placés le ou les substrats pré-scellés susmentionnés ;
un mécanisme d'introduction pour extraire du plateau le ou les substrats pré-scellés préchauffés et placer le ou les substrats pré-scellés susmentionnés respectivement sur les parties de prise de substrat du moule de scellement par une résine ; et
un mécanisme d'extraction pour extraire du moule de scellement par une résine un ou plusieurs produits scellés par une résine formés par scellement par une résine de chacun du ou des substrats pré-scellés susmentionnés au moyen d'une résine durcie qui est formée par durcissement de la résine fluide remplissant la cavité ;
dans lequel :
un évidement correspondant à la saillie de chacun du ou des substrats pré-scellés susmentionnés est formé dans le plateau ; et
le ou les substrats pré-scellés susmentionnés peuvent être placés sur le plateau, la saillie et l'évidement étant alignés.

2. Dispositif de scellement par une résine utilisé pour la fabrication d'une unité électronique par scellement collectif par une résine d'une pluralité de composants sur un substrat pré-scellé ayant un substrat de circuit et la pluralité de composants montés sur le substrat de circuit, comprenant :
un plateau sur lequel sont placés le ou les substrats pré-scellés susmentionnés ;
un mécanisme de préchauffage pour préchauffer le plateau sur lequel sont placés le ou les substrats pré-scellés susmentionnés ;
un premier mécanisme de transfert pour transférer au mécanisme de préchauffage le plateau sur lequel sont placés le ou les substrats pré-scellés susmentionnés, et placer le plateau sur le mécanisme de préchauffage ;
un moule de scellement par une résine ayant une cavité qui est destinée à être remplie par une résine fluide et une ou plusieurs parties de prise de substrat sur lesquelles peuvent être placés le ou les substrats pré-scellés susmentionnés ;
un mécanisme d'introduction pour extraire du plateau le ou les substrats pré-scellés préchauffés et placer le ou les substrats pré-scellés susmentionnés respectivement sur les parties de prise de substrat du moule de scellement par une résine ; et
un mécanisme d'extraction pour extraire du moule de scellement par une résine un ou plusieurs produits scellés par une résine formés par scellement par une résine de chacun du ou des substrats pré-scellés susmentionnés au moyen d'une résine durcie qui est formée par durcissement de la résine fluide remplissant la cavité,
dans lequel :
un évidement correspondant à une forme du substrat pré-scellé et une ouverture enjambant au moins une partie du substrat pré-scellé placé sur le plateau sont formés dans le plateau ;
le ou les substrats pré-scellés susmentionnés peuvent être placés sur le plateau, chacun du ou des substrats pré-scellés susmentionnés et l'évidement étant alignés ; et
le premier mécanisme de préchauffage comprend une ou plusieurs parties de maintien dont chacune incorpore un premier dispositif chauffant, et dont chacune est placée dans l'ouverture et vient en contact avec chacun du ou des substrats pré-scellés susmentionnés quand le plateau est placé sur le mécanisme de préchauffage.

3. Dispositif de scellement par une résine selon l'une ou l'autre des revendications 1 et 2, comprenant une pluralité des mécanismes de préchauffage susmentionnés.

4. Dispositif de scellement par une résine selon la revendication 3, dans lequel :
le mécanisme de préchauffage a un ou plusieurs deuxièmes dispositifs chauffants pour préchauffer chacun du ou des substrats pré-scellés susmentionnés ; et
chacun du ou des deuxièmes dispositifs chauffants susmentionnés émet une lumière infrarouge sur une frontière entre une zone ayant une conductivité thermique faible et une zone devant être scellée par une résine au moyen de la résine durcie dans chacun du ou des substrats pré-scellés susmentionnés.

5. Dispositif de scellement par une résine selon l'une quelconque des revendications 1 à 4, comprenant :
un mécanisme de refroidissement pour refroidir le plateau dont le ou les substrats pré-scellés susmentionnés ont été extraits ;
un deuxième mécanisme de transfert pour transporter vers le mécanisme de refroidissement le plateau dont le ou les substrats pré-scellés susmentionnés ont été extraits ; et
un mécanisme de stockage pour stocker le plateau refroidi ;
dans lequel :
le ou les substrats pré-scellés susmentionnés sont placés sur le plateau extrait du mécanisme de stockage.

6. Dispositif de scellement par une résine selon l'une quelconque des revendications 1 à 5, comprenant une pluralité des mécanismes de refroidissement susmentionnés.

7. Dispositif de scellement par une résine selon l'une quelconque des revendications 1 à 6, comprenant un mécanisme de séparation pour séparer une résine inutile composée d'une partie inutile de la résine durcie d'avec chacun du ou des produits scellés par une résine susmentionnés.

8. Procédé de scellement par une résine utilisé dans la fabrication d'une unité électronique par scellement collectif par une résine d'une pluralité de composants sur un substrat pré-scellé ayant un substrat de circuit et la pluralité de composants montés sur le substrat de circuit, les composants comprenant au moins un connecteur avec une saillie, le procédé comprenant les étapes suivantes :
préparation d'un plateau sur lequel sont placés le ou les substrats pré-scellés susmentionnés ;
transfert à un mécanisme de préchauffage du plateau sur lequel sont placés le ou les substrats pré-scellés susmentionnés et placement du plateau sur le mécanisme de préchauffage ;
préchauffage du ou des substrats pré-scellés susmentionnés ;
extraction hors du plateau du ou des substrats pré-scellés préchauffés, transport du ou des substrats pré-scellés préchauffés vers un moule de scellement par une résine, et placement du ou des substrats pré-scellés susmentionnés dans une position prédéterminée dans le moule de scellement par une résine ;
immersion de la pluralité de composants dans une résine fluide remplissant une cavité formée dans le moule de scellement par une résine ;
durcissement de la résine fluide remplissant la cavité pour former une résine durcie ; et
extraction hors du moule de scellement par une résine d'un ou plusieurs produits scellés par une résine, formés par scellement par une résine de chacun du ou des substrats pré-scellés susmentionnés ;
dans lequel :
le plateau a un évidement correspondant à la saillie de chacun du ou des substrats pré-scellés susmentionnés ; et
l'étape de préparation d'un plateau comprend l'alignement de la saillie et de l'évidement et le placement sur le plateau du ou des substrats pré-scellés susmentionnés.

9. Procédé de scellement par une résine selon la revendication 8, dans lequel :
l'étape de placement du plateau sur le mécanisme de préchauffage comprend le placement d'un plateau en séquence sur une pluralité de mécanismes de préchauffage susmentionnés ou le placement de chacun parmi une pluralité de plateaux susmentionnés sur la pluralité de mécanismes de préchauffage susmentionnés, et le chauffage progressif du plateau ou des plateaux.

10. Procédé de scellement par une résine utilisé dans la fabrication d'une unité électronique par scellement collectif par une résine d'une pluralité de composants sur un substrat pré-scellé ayant un substrat de circuit et la pluralité de composants montés sur le substrat de circuit, le procédé comprenant les étapes suivantes :
préparation d'un plateau sur lequel sont placés le ou les substrats pré-scellés susmentionnés ;
transfert à un mécanisme de préchauffage du plateau sur lequel sont placés le ou les substrats pré-scellés susmentionnés et placement du plateau sur le mécanisme de préchauffage ;
préchauffage du ou des substrats pré-scellés susmentionnés ;
extraction hors du plateau du ou des substrats pré-scellés préchauffés, transport du ou des substrats pré-scellés préchauffés vers un moule de scellement par une résine, et placement du ou des substrats pré-scellés susmentionnés dans une position prédéterminée dans le moule de scellement par une résine ;
immersion de la pluralité de composants dans une résine fluide remplissant une cavité formée dans le moule de scellement par une résine ;
durcissement de la résine fluide remplissant la cavité pour former une résine durcie ; et
extraction hors du moule de scellement par une résine d'un ou plusieurs produits scellés par une résine, formés par scellement par une résine de chacun du ou des substrats pré-scellés susmentionnés ;
dans lequel :
le plateau a un évidement correspondant à une forme de chacun du ou des substrats pré-scellés susmentionnés et une ouverture enjambant au moins une partie de chacun du ou des substrats pré-scellés placés sur le plateau ;
le mécanisme de préchauffage a une ou plusieurs parties de maintien dont chacune incorpore un premier dispositif chauffant ;
l'étape de préparation d'un plateau comprend l'alignement du ou des substrats pré-scellés susmentionnés et de l'évidement et le placement sur le plateau du ou des substrats pré-scellés susmentionnés ; et
l'étape de préchauffage comprend le placement de chacune parmi la ou les parties de maintien dans l'ouverture de façon que le ou les substrats pré-scellés susmentionnés placés sur le plateau respectivement viennent en contact avec les parties de maintien et soient ainsi individuellement et directement préchauffés.

11. Procédé de scellement par une résine selon la revendication 10, dans lequel :
le mécanisme de préchauffage a un ou plusieurs deuxièmes dispositifs chauffants pour préchauffer chacun du ou des substrats pré-scellés susmentionnés ; et
dans l'étape de préchauffage, chacun du ou des deuxièmes dispositifs chauffants susmentionnés émet une lumière infrarouge sur une frontière entre une zone ayant une conductivité thermique faible et une zone devant être scellée par une résine au moyen de la résine durcie dans chacun du ou des substrats pré-scellés susmentionnés.

12. Procédé de scellement par une résine selon l'une quelconque des revendications 8 à 11, comprenant les étapes suivantes :
transport vers le mécanisme de refroidissement du plateau dont le ou les substrats pré-scellés susmentionnés ont été extraits ;
refroidissement du plateau dont le ou les substrats pré-scellés susmentionnés ont été extraits, au moyen du mécanisme de refroidissement ; et
stockage du plateau refroidi.

13. Procédé de scellement par une résine selon la revendication 12, dans lequel :
l'étape de refroidissement du plateau comprend le placement d'un plateau susmentionné en séquence sur la pluralité de mécanismes de refroidissement, ou le placement de chacun parmi une pluralité de plateaux susmentionnés sur la pluralité de mécanismes de refroidissement, et ensuite le refroidissement progressif du plateau ou des plateaux.

14. Procédé de scellement par une résine selon l'une quelconque des revendications 8 à 13, comprenant l'étape de séparation d'une résine inutile, composée d'une partie inutile de la résine durcie, d'avec le produit scellé par une résine.
